(19) **Europäisches Patentamt**

**European Patent Office**

**Office européen des brevets**

(11) Veröffentlichungsnummer: **0 501 098 A1**

(12) **EUROPÄISCHE PATENTANMELDUNG**

(21) Anmeldenummer: **92100004.8**

(51) Int. Cl.5: **C03B 7/10**

(22) Anmeldetag: **02.01.92**

(30) Priorität: **14.02.91 DE 4104495**

(43) Veröffentlichungstag der Anmeldung:
**02.09.92 Patentblatt 92/36**

(84) Benannte Vertragsstaaten:
**DE FR GB IT SE**

(71) Anmelder: **Firma HERMANN HEYE**
**Lohplatz 1**
**W-3063 Obernkirchen(DE)**

(72) Erfinder: **Bögert, Hermann**
**Birkenweg 19**

**W-3262 Auetal 2(DE)**
Erfinder: **Sieg, Ulrich**
**Parkstrasse 8**
**W-3063 Obernkirchen(DE)**
Erfinder: **Bohn, Ralph-Joachim**
**Viktoriastrasse 59**
**W-4950 Minden(DE)**

(74) Vertreter: **Kosel, Peter, Dipl.-Ing. et al**
**Patentanwälte Dipl.-Inge. Röse, Kosel &**
**Sobisch Odastrasse 4a Postfach 129**
**W-3353 Bad Gandersheim 1(DE)**

(54) **Vorrichtungen und Verfahren zum Abtrennen von Posten von Glassträngen.**

(57) Scherenarme (18,19) trennen mit Scherblattpaaren (8,11) periodisch Posten von Glassträngen (2,3) ab, die aus einem Tropfring (6) austreten. Jeder Scherenarm weist einen Fortsatz (62,63) auf, die an einer Lasche (67) angelenkt sind. Einer (19) der Scherenarme ist über ein Verbindungselement (70) durch einen Kurbelzapfen (69) eines Antriebs (68) um eine senkrechte Achse (23) schwenkend antreibbar. Der Antrieb (68) wird von einem Schwenkrahmen (82) getragen, der durch einen Schwenkmotor (88) um eine senkrechte Schwenkachse (81) schwenkbar ist, wenn die Scherenarme (18,19) in eine maximal geöffnete Servicestellung (44) geschwenkt werden sollen. Eine zu der Schwenkachse (81) gehörende Achse (91) ist Bestandteil eines Scherengehäuses (24), das in Umfangsrichtung (53) des Tropfrings (6) und rechtwinklig dazu entlang einer Schwalbenschwanzverbindung (49) einstellbar ist.

Fig. 2

Die Erfindung betrifft zunächst eine Vorrichtung nach dem Oberbegriff des Anspruchs 1.

Bei einer bekannten Vorrichtung dieser Art (US-Patentschrift 2 472 560) findet ein pneumatisch-mechanischer Antrieb der Scherenarme 1,2 Verwendung. Der eine Scherenarm 2 ist über eine Koppelstange 14 mit einem Schwinghebel 12 mit einer Kurvenrolle 11 verbunden. Die Kurvenrolle 11 läuft auf einer umlaufenden Kurvenbahn 10a, 10b, zu der koaxial eine weitere umlaufende Kurvenbahn 50 zur Betätigung eines pneumatischen Steuerventils 36 angeordnet ist. Das Steuerventil 36 beaufschlagt über eine Leitung 51, 52 eine Kammer 17b einer Kolben-Zylinder-Einheit 17 mit Druckluft, deren Kolbenstange 18 an dem anderen Scherenarm 1 angelenkt ist. So wird die Kraft zum Schließen der Scherblätter 7, 8 durch die Kolben-Zylinder-Einheit 17 aufgebracht, wobei der Ablauf der Schließbewegung mechanisch durch die Kurvenbahn 10b kontrolliert wird. Darüber hinaus hält die Kolben-Zylinder-Einheit 17 die Kurvenrolle 11 stets in Anlage an der Kurvenbahn 10a, 10b. Diese bekannte Vorrichtung ist aufwendig und wenig flexibel. Bei höheren Schnittzahlen von z.B. bis zu 200 Schnitt/min ist der bekannte Antrieb überfordert. Außerdem ist der Arbeitshub der Scherenarme gleich deren Servicehub für den Austausch des Tropfrings und daher unnötig groß.

Aus der US-Patentschrift 2 977 718 ist eine Vorrichtung an sich bekannt, die einen pneumatisch-hydraulischen Antrieb verwendet. Sie erfordert hohen Schaltungsaufwand und ist ebenfalls für höhere Schnittzahlen nicht geeignet.

Bei einer anderen an sich bekannten Vorrichtung (US-Patentschrift 2 678 519) ist jeder der beiden Scherenarme 1, 2 in der gleichen Weise gesondert angetrieben, und zwar über eine Koppelstange 16, 17, einen Kurbelzapfen 18, 19 mit Kurbel 20, 21 und Kurbelwelle 22, 23, ein Ritzel 28, 29 und eine Zahnstange 30, 31, die durch Kolben 33, 34 von Pneumatikzylindern 10, 27 verschiebbar sind. Die Steuerung der Pneumatikzylinder 10, 27 erfolgt über Nocken 109, 137, 138 und mehrere Ventile einer Pneumatikschaltung. Auch hier sind der Aufwand beträchtlich und die Flexibilität gering.

Aus der GB-Patentschrift 688 803 ist eine Vorrichtung an sich bekannt, bei der beide Scherenarme 1, 2 jeweils über eine Lasche 10, 11 durch die Kolbenstange 12, 13 eines gemeinsamen doppeltwirkenden Pneumatikzylinders 14 antreibbar sind. Dadurch ist der Verlauf der Bewegung der Scherenarme nicht reproduzierbar. Die Länge der Scherenarme muß an den Hub des Zylinders 14 angepaßt werden. Eine Zentrierung der Scherenarme 1,2 auf die Achse des Tropfrings ist nicht möglich.

Der Erfindung liegt zunächst die Aufgabe zugrunde, die eingangs genannte Vorrichtung zu verbessern.

Diese Aufgabe ist durch die Merkmale des Anspruchs 1 gelöst. Es können auf diese Weise z.B. für den Doppelformbetrieb zwei Posten und für den Dreifachformbetrieb drei Posten schmelzflüssigen Glases im wesentlichen gleichzeitig von den zugehörigen Strängen abgetrennt werden. Entsprechend viele Scherblattpaare sind dann im Abstand der Stränge voneinander an den beiden Scherarmen angeordnet. Als Servomotor kommt insbesondere ein Drehstrom-Servomotor mit Rückführgeber in Betracht, dessen Steuerung hinsichtlich des Geschwindigkeits-Drehwinkel-Verlaufs frei programmierbar ist. So läßt sich durch Vorprogrammierung den Scherenarmen in jeder Winkelstellung der optimale Geschwindigkeitswert aufprägen, und zwar bei Bedarf unterschiedlich für die Schließ- und die Öffnungsbewegung der Scherenarme. Der Schnitthub ist durch entsprechende Programmierung der Steuerung des Servomotors auf besonders einfache Weise änderbar. Damit der Betrieb nicht asynchron wird, wird die Kurbel nach jedem Arbeitsspiel zum Stillstand gebracht und in diesem Stillstand während einer Mindestwartedauer von z.B. 20 ms gehalten. Bei gegebener Bewegungsdauer der Scherenarme während eines Betriebszyklus von z.B. 250 ms hängt die Größe der Wartedauer von der Schnittzahl ab, also von der Anzahl von Scherenschnitten je Minute. Durch die erfindungsgemäße Verwendung des elektrischen Servomotors läßt sich die Gesamtzyklusdauer, die, wie erwähnt, z.B. 250 ms beträgt, praktisch mit beliebiger Genauigkeit von z.B. etwa 1 ms reproduzierbar gestalten. Der Kurbeltrieb als nicht-lineares Übertragungsgetriebe gestattet es, den Servomotor relativ entlastet anzufahren. So wird dem Servomotor die Eigenbeschleunigung beim Anfahren erleichtert und der Energiebedarf verringert. Vorteilhaft ist ferner, daß die Kurbel und die Laschen außerdem die Funktion des die Bewegungen der Scherenarme synchronisierenden Getriebes sehr präzise übernehmen, also eine Verzahnung zwischen den Scherenarmen nicht mehr erforderlich ist. Durch Fortfall der sonst üblichen gedrosselten Luftfeder an dem nicht unmittelbar angetriebenen Scherenarm wird außerdem Antriebsenergie gespart. Vorzugsweise erstrecken sich die Fortsätze der Scherenarme weg von den Scherblättern nach hinten. Der zeitliche Verlauf der Schließ- und Öffnungsbewegungen der Scherenarme läßt sich in weiten Bereichen sehr vorteilhaft auch durch Änderung der geometrischen Parameter von Kurbel und/oder Laschen und/oder Fortsätzen der Scherenarme beeinflussen.

Die Merkmale des Anspruchs 2 führen zu einem baulich besonders einfachen Getriebe.

Die Merkmale des Anspruchs 3 gestatten auf besonders einfache Weise und ggf. ohne Änderung der sonstigen geometrischen Parameter der Vorrichtung eine Modulation des Bewegungsverhaltens der beiden Scherenarme.

Gemäß Anspruch 4 ist die Höheneinstellung nur eines der Scherenarme relativ zu dem anderen Scherenarm erleichtert. Eine solche Höheneinstellung nur eines der Scherenarme dient dazu, die während des Abtrennens bestehende Vorspannkraft der Scherblätter gegeneinander während des Abtrennens einzustellen. Dadurch kann die Qualität des Abtrennens optimiert werden.

Gemäß Anspruch 5 läßt sich auf besonders einfache Weise erreichen, daß sich beide Scherblätter jedes Scherblattpaars in demjenigen Augenblick, in welchem der Posten vollständig von dem Strang abgetrennt ist, ohne seitlichen Versatz genau in der Längsachse des Stranges befinden.

Die Merkmale des Anspruchs 6 schaffen genügend Platz zwischen den Scherenarmen für das die Bewegung der Scherenarme synchronisierende Getriebe und führen zu einer kinematisch günstigen Anordnung.

Gemäß Anspruch 7 sind die kinematischen Verhältnisse zur Erzielung der Servicestellung besonders günstig. Zwischen der maximal geöffneten Servicestellung und der geschlossenen Stellung der Scherenarme befindet sich eine nur teilweise geöffnete Arbeitsstellung der Scherenarme. Im normalen Betrieb bewegen sich die Scherenarme also zwischen der geschlossenen und der teilweise geöffneten Arbeitsstellung.

Die Merkmale des Anspruchs 8 führen zu einer besonders einfachen Bauweise des Getriebes zwischen den Scherenarman. Die hin- und herschwenkende Bewegung kann entweder durch entsprechend reversierten Betrieb des Antriebs oder durch ein Umkehrgetriebe zwischen der Kurbel und dem dann nur in einer Drehrichtung laufenden Antrieb erfolgen.

Durch die Merkmale des Anspruchs 9 wird verhindert, daß bei einem Ausfall des Antriebs die Scherblätter in einer mit dem zugehörigen Strang kollidierenden Stellung stehen bleiben. Der Antrieb kann z.B. durch einen Schadenfall oder bei Stromausfall zum Stillstand gelangen. Der Hilfsantrieb ist vorzugsweise selbsttätig durch eine übergeordnete Steuerung betätigbar, sobald sich ein Ausfall des Antriebs abzeichnet.

Gemäß Anspruch 10 erhält man einen besonders einfachen und wirkungsvollen Hilfsantrieb. Der Kipphebel tritt vorzugweise nur bei Ausfall des Antriebs in Wirkverbindung mit dem Fortsatz.

Die zuvor erwähnte Aufgabe ist auch durch die Merkmale des Anspruchs 11 gelöst. Dieses Getriebe zwischen den beiden Scherenarmen ist baulich besonders einfach und betriebssicher. Wenigstens an einem Ende der Lasche kann ein Universalgelenk vorgesehen sein, um einerseits die Vorrichtung zwängungsfrei zu halten und andererseits die Höheneinstellung eines Scherenarms gegenüber

dem anderen zu ermöglichen. Im übrigen kann hierbei einer der Scherenarme durch den Antrieb hin- und herschwenkend angetrieben werden. Dafür eignet sich insbesondere ein Kurbeltrieb mit einer Koppelstange, die zwischen den Enden des betreffenden Scherarms angelenkt ist.

Mit den Merkmalen des Anspruchs 12 läßt sich auf besonders einfache Weise Einfluß auf das Bewegungsverhalten der Scharanarme nehmen. Zum Beispiel kann einer der Fortsätze in der Länge einstellbar sein.

Gegebenenfalls bietet auch die Schwenkeinstallung gemäß Anspruch 13 besondere Vorteile.

Mit den Merkmalen des Anspruchs 14 läßt sich auf verhältnismäßig einfache Weise in weitem Umfang eine günstige Bewegungscharakteristik dar beiden Scherenarme erzielen.

Die Merkmale des Anspruchs 15 ermöglichen gewissermaßen eine Ferneinstellung derjenigen Kraft, mit der die Scherblätter eines Scherblattpaars während des Abtrennens gegeneinandergedrückt werden. Diese Einstellung kann in besonders vorteilhafter Weise während des Betriebs der Vorrichtung durchgeführt werden. Im anderen Fall wäre zur relativen Höheneinstellung der Scherblätter die Stillsetzung der Vorrichtung erforderlich.

Die Merkmale des Anspruchs 16 sind konstruktiv besonders günstig. Zweckmäßigerweise ist die Lagerhülse gegen Drehung um ihre senkrechte Achse gesichert. Die Einstellung geschieht vorzugsweise durch eine handbetätigbare Gewindespindel. Die einmal gefundene optimale Höheneinstellung kann durch Festklemmung der Lagerhülse gesichert werden.

Aus der DE-Auslegeschrift 1 922 247 ist es an sich bekannt, linear bewegbare Scherblätter in einem rechteckigen Scherenrahmen 22 unterzubringen. Der Scherenrahmen 22 ist exzentrisch an einer vertikalen Schwenkzapfenkonstruktion 24 einerseits um eine senkrechte Achse schwenkbar und andererseits in der Höhe relativ zu einer Tropfringöffnung 16 einer Speiserschüssel 14 einstellbar angeordnet.

Die zuvor erwähnte Aufgabe ist auch durch die Merkmale des Anspruchs 17 gelöst. So läßt sich das wenigstens eine Scherblattpaar besonders einfach in die für das Abtrennen der Posten optimale Höhenebene einstellen. Der Einstellhub beträgt z.B. 40 mm. Dies reicht aus, um in jedem Fall das Abtrennen in der optimalen Höhenebene vorzunehmen, insbesondere dort, wo der Strang kurz vor dem Abtrennen ohnehin seine stärkste Einschnürung aufweist. So läßt sich auch recht einfach die vorerwähnte maximal geöffnete Servicestellung der Scherenarme erzielen.

Gemäß Anspruch 18 ergibt sich eine sehr flexible Ausbildung, die alle für den praktischen Betrieb erforderlichen Freiheitsgrade in der Einstellung der Vorrichtung aufweist. Zwischen der Baueinheit und dem Führungsstück ist zweckmäßigerweise eine Schwalbenschwanzführung vorgesehen.

Die Merkmale des Anspruchs 19 führen zu einer konstruktiv besonders günstigen Schwenkung des Antriebs. Dabei kann der Antrieb z.B. einen Kurbeltrieb aufweisen, der über eine Koppelstange mit dem unmittelbar angetriebenen Scherenarm verbunden ist.

Gemäß Anspruch 20 läßt sich die Schwenkung des Antriebs mechanisieren und insbesondere im Rahmen einer übergeordneten Programmsteuerung verwirklichen.

Gemäß Anspruch 21 ist eine Feineinstellung der Arbeitsstellung des Antriebs und damit des sog. Überschnitts, also der Überlappung der Scherblätter, mit einfachen Mitteln ermöglicht.

Die Anschlagvorrichtung gemäß Anspruch 22 ist besonders feinfühlig einstellbar und funktionssicher. Das Anschlagelement kann z.B. als schwenkbar gelagerter Bolzen mit einer sich an die Keilfläche anlegenden Abflachung ausgebildet sein. So kann sich der Bolzen selbsttätig auf jede gewünschte Arbeits-Schwenkstellung des Schwenkrahmens einstellen.

Weitere Merkmale und Vorteile der Erfindung ergeben sich aus der nachfolgenden Beschreibung von Ausführungsbeispielen der Erfindung anhand der Zeichnungen. Es zeigt:

Fig. 1 die Ansicht von unten auf eine erste Ausführungsform der Vorrichtung,

Fig. 2 die Ansicht von unten auf eine weitere Ausführungsform der Erfindung,

Fig. 3 eine teilweise geschnittene Seitenansicht der Vorrichtung im wesentlichen entsprechend Linie III-III in Fig. 2,

Fig. 4 ein Detail aus Fig. 3 in vergrößerter Darstellung,

Fig. 5 die Seitenansicht gemäß Linie V-V in Fig. 2,

Fig. 6 ein Detail aus Fig. 2 in vergrößerter Darstellung,

Fig. 7 die Schnittansicht nach Linie VII-VII in Fig. 6 und

Fig. 8 einen Hilfsantrieb zur Verwendung bei der Ausführungsform nach Fig. 1.

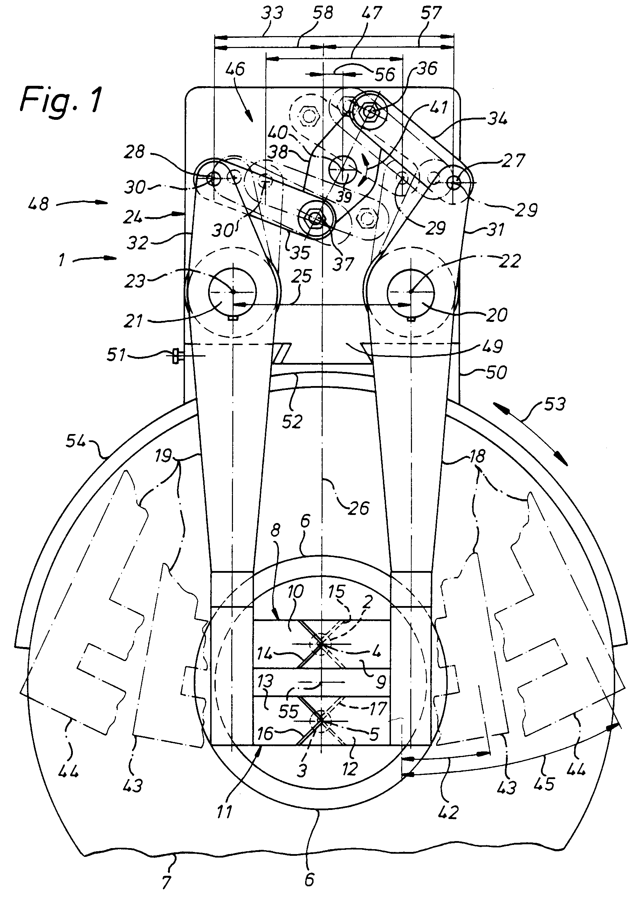

Fig. 1 zeigt eine Vorrichtung 1 zum Abtrennen von Posten oder Tropfen von zwei Strängen 2 und 3 aus schmelzflüssigem Glas. Die Stränge 2,3 haben Längsachsen 4 und 5 und treten senkrecht aus der Zeichenebene heraus aus einem Tropfring 6 am unteren Ende einer Speiserschüssel 7 aus. Bei der Speiserschüssel 7 handelt es sich um das Endstück eines an sich bekannten Speisers oder Feeders für schmelzflüssiges Glas.

Von dem Strang 2 trennt ein Scherblattpaar 8 mit einem unteren Scherblatt 9 und einem oberen Scherblatt 10 periodisch Posten aus schmelzflüssigem Glas ab, die in an sich bekannter Weise einer Glasformmaschine zur Herstellung von Hohlglasgegenständen zugeführt werden. In ähnlicher Weise trennt ein Scherblattpaar 11 mit einem unteren Scherblatt 12 und einem oberen Scherblatt 13 von dem Strang 3 periodisch Glasposten ab. Jedes Scherblatt 9,10 und 12,13 ist an seinem freien Ende mit einer V-förmigen Schneidkante 14 bis 17 ausgerüstet. Die Schneidkanten 14,15 und 16,17 jedes Scherblattpaars 8, 11 gleiten aufeinander unter einer gewissen Vorspannung, um einen sauberen Schnitt zu erzielen. In Fig. 1 ist gerade derjenige Augenblick dargestellt, in dem die Scheitel der Schneidkanten 14,15 und 16,17 jeweils miteinander axial fluchten, die zugehörigen Posten also gerade eben von den Strängen 2,3 abgetrennt worden sind. In der Praxis werden die Scherblattpaare 8,11 gelegentlich noch weiter geschlossen, so daß sich ein sogenannter Überschnitt, also eine Überlappung der einzelnen Scherblätter 9,10 und 12,13 auch an den Scheiteln der Schneidkanten 14 bis 17, ergibt. Dies dient dazu, unter allen Umständen den Posten vollständig vom zugehörigen Strang 2,3 abzutrennen.

Die unteren Scherblätter 9,12 sind im Abstand der Längsachsen 4,5 voneinander an einem ersten Scherenarm 18 befestigt, während die oberen Scherblätter 10,13 in dem gleichen Abstand voneinander an einem zweiten Scherenarm 19 befestigt sind. Die Scherenarme 18,19 sind jeweils an einer Welle 20 und 21 befestigt und um eine senkrechte Achse 22 und 23 schwenkbar. Die Wellen 20,21 sind in später zu erläuternder Weise in einem Scherengehäuse 24 frei schwenkbar gelagert. Die Längsachsen 22,23 befinden sich in einem Abstand 25 voneinander, der rechtwinklig zu einer Mittenebene 26 zwischen den senkrechten Achsen 22,23 gemessen ist. Die Längsachsen 4,5 der Stränge 2,3 liegen in dieser Mittenebene 26.

In Fig. 1 befinden sich die Scherenarme 18,19 in einer geschlossenen Stellung, in der Längsachsen 29 und 30 von Zapfen 27 und 28 an rückwärtigen Fortsätzen 31 und 32 der Scherenarme 18,19 einen Abstand 33 voneinander aufweisen, der größer ist als der Abstand 25 der senkrechten Achsen 22,23 voneinander. Der Abstand 33 ist rechtwinklig zur Mittenebene 26 gemessen.

Jeder Zapfen 27,28 ist an einem Ende einer Lasche 34 und 35 angelenkt, deren anderes Ende jeweils an einem Kurbelzapfen 36 und 37 einer Kurbel 38 angelenkt ist. Die Kurbel 38 ist an einer Welle 39 mit senkrechter Längsachse 40 befestigt. Durch einen später zu beschreibenden Antrieb, der einen elektrischen Servomotor aufweist, ist die Welle 39 während eines Betriebszyklus im Sinne des Doppelpfeils 41 hin- und herschwenkend antreibbar.

Im normalen Abtrennbetrieb ist der Schwenkwinkel der Welle 39 verhältnismäßig klein und führt zu einem entsprechend kleinen Arbeitshub 42 der Scherenarme 18,19.

Ausgehend von der in Fig. 1 mit vollausgezogenen Linien dargestellten geschlossenen Stellung der Scherenarme 18,19 sind in Fig. 1 außerdem mit strichpunktierten Linien eine geöffnete Arbeitsstellung 43 und eine maximal geöffnete Servicestellung 44 der Scherenarme 18,19 eingezeichnet. Die maximal geöffnete Servicestellung 44 wird nach einem verhältnismäßig großen Servicehub 45 erreicht. Der Arbeitshub 42 kann im normalen Betrieb minimal gehalten werden. Auf diese Weise werden Antriebsenergie und Verschleiß auf ein Minimum reduziert. Sollen dagegen Servicearbeiten an dem Tropfring 6 durchgeführt werden, wird die Kurbel 38 in der strichpunktiert angedeuteten Weise weiter als im normalen Abtrennbetrieb geschwenkt und dadurch die Scherenarme 18,19 in die Servicestellung 44 gebracht. Diese gestattet in ausreichendem Umfang freien Zugriff für das Servicepersonal zu dem Tropfring 6 und erleichtert dessen Wartung oder Austausch.

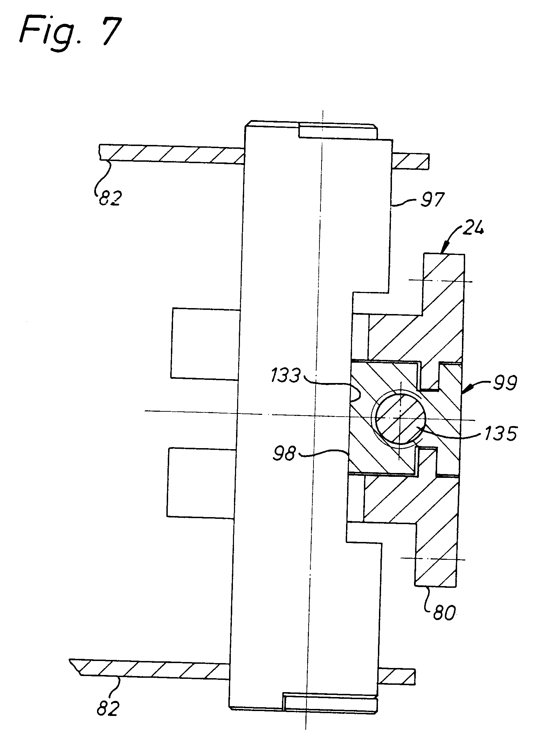

Dieser mehr oder minder große Schwenkwinkel der Welle 39 der Kurbel 38 läßt sich in einer elektronischen Steuerung des Servomotors in an sich bekannter Weise frei programmieren. Sollte der Antrieb aus irgendeinem Grund ausfallen, will man dennoch, vorzugsweise selbsttätig, die Scherenarme in die Servicestellung öffnen, um eine Kollision der Stränge 2,3 mit den Scherblattpaaren 8,11 zu verhindern. Dazu kann ein Hilfsantrieb dienen, der später im Zusammenhang mit Fig. 7 beschrieben wird.

Die Fortsätze 31,32, die Laschen 34,35 und die Kurbel 38 bilden ein Getriebe 46, durch das die Schließ- und Öffnungsbewegungen der Scherenarme 18,19 miteinander synchronisiert sind. In der maximal geöffneten Servicestellung 44 der Scherenarme 18,19 weisen die Längsachsen 29, 30 der Zapfen 27,28 einen wiederum rechtwinklig zu der Mittenebene 26 gemessenen Abstand 47 voneinander auf, der kleiner ist als der Abstand 25 der senkrechten Achsen 22,23 voneinander.

Die Vorrichtung 1 mit ihrem in Fig. 1 nicht dargestellten Antrieb sind zu einer Baueinheit 48 ausgebildet, die in senkrechter Richtung einstellbar ist. Dazu ist das Scherengehäuse 24 über eine Schwalbenschwanzverbindung 49 in senkrechter Richtung gegenüber einem Führungsstück 50 verschiebbar und in der gewünschten senkrechten Stellung durch Schrauben 51 fixierbar. Das Führungsstück 50 ist mit einer kreiszylindrischen Fläche 52 in einer Umfangsrichtung 53 der Speiserschüssel 7 entlang kreisbogenförmiger Einstellschienen, z.B. 54, einstellbar und in der gewünschten Umfangsstellung fixierbar. Einzelheiten dazu werden später erläutert. Sowohl die kreiszylindrische Fläche 52 als auch die Einstellschienen, z.B. 54, sind konzentrisch zu einer senkrechten Längsachse 55 des Tropfrings 6 ausgebildet.

Der Verlauf der Schließ- und Öffnungsbewegungen der Scherenarme 18,19 läßt sich durch eine Vielzahl geometrischer Parameter in jeder beliebigen Weise optimal beeinflussen. Zu diesen Parametern gehören insbesondere die wirksamen Längen der Fortsätze 31,32 und/oder der Laschen 34,35 und/oder der Kurbelradien der Kurbelzapfen 36,37. In Fig. 1 sind die Kurbelzapfen 36,37 diametral zur Längsachse 40 der Welle 39 angeordnet. Die Längsachse 40 befindet sich ihrerseits in einem rechtwinklig zur Mittenebene 26 gemessenen Abstand 56 von der Mittenebene 26. Durch diese Maßnahme läßt sich auf besonders einfache Weise erreichen, daß am Ende des Abtrennvorgangs die Scheitel der Schneidkanten 14 bis 17 ebenfalls in der Mittenebene 26 liegen. In diesem Ausführungsbeispiel ist, jeweils wiederum rechtwinklig zu der Mittenebene 26 gemessen, ein Abstand 57 der Längsachse 29 von der Mittenebene 26 größer als ein Abstand 58 der Längachse 30 von der Mittenebene 26. Dies gilt für die in Fig. 1 mit vollausgezogenen Linien gezeichnete geschlossene Stellung der Scherenarme 18,19.

In allen Ausführungsbeispielen sind gleiche Teile mit gleichen Bezugszahlen versehen.

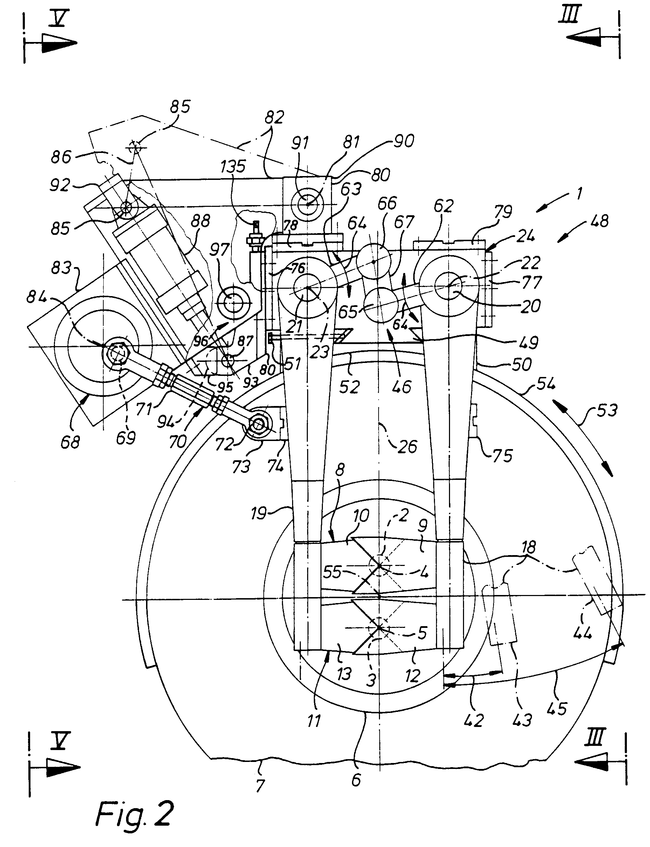

Bei dem Ausführungsbeispiel nach Fig. 2 ist das Getriebe 46 in besonderer Weise ausgebildet. Jeder Scherenarm 18,19 weist einen Fortsatz 62 und 63 auf, deren wirksame Längen gleich oder unterschiedlich sein können. Im Fall der Fig. 2 sind die wirksamen Längen der Fortsätze 62,63 gleich, jedoch sind die Fortsätze 62,63 relativ zu dem Rest der Scherenarme 18,19 im Sinne der Doppelpfeile 64 um die senkrechten Achsen 22,23 herum schwenkbar und jeweils in einer gewählten Schwenkstellung arretierbar. Einzelheiten dazu werden später erläutert. Durch diese Schwenkeinstellung der Fortsätze 62,63 relativ zu den Scherenarmen 18,19 läßt sich eine gewünschte Bewegungscharakteristik der Scherenarme 18,19 auf recht einfache Weise bewerkstelligen.

Die freien Enden der Fortsätze 62,63 sind jeweils durch ein Gelenk 65 und 66, vorzugsweise ein Universalgelenk, mit einer Lasche 67 verbunden.

Bei der Ausführungsform nach Fig. 2 wird nur der Scherenarm 19 durch einen Antrieb 68 direkt angetrieben, während der andere Scherenarm 18 über das Getriebe 46 durch den Scherenarm 19 geschleppt ist. Der Antrieb 68 treibt über einen Kurbelzapfen 69 ein als Koppelstange ausgebildetes Verbindungselement 70, das über eine Schraubverbindung 71 in der Länge einstellbar ist. Das Verbindungselement 70 ist an einem Zapfen 72 eines Anschlußstücks 73 angelenkt, vorzugsweise über ein Universalgelenk. Das Anschlußstück 73 ist mit einer Aufnahme 74 des Scherenarms 19 gekuppelt. Eine gleichartige Aufnahme 75 befindet sich an der Außenseite des Scherenarms 18, so daß, wenn die räumlichen Vorgaben dies erfordern, der Antrieb 68 samt Verbindungselement 70 und Anschlußstück 73 auch auf die in Fig. 2 rechte Seite der Vorrichtung 1 umgesetzt werden kann.

Zu diesem Zweck ist außerdem das Scherengehäuse 24 auf beiden Seiten mit jeweils einer Anschlußplatte 76 und 77 und einer Aufnahme 78 und 79 versehen, mit denen entweder links, wie in Fig. 2 gezeichnet, oder rechts ein umsetzbarer Teil 80 des Scherengehäuses 24 kuppelbar ist.

Der umsetzbare Teil 80 des Scherengehäuses 24 trägt um eine senkrechte Schwenkachse 81 herum schwenkbar einen Schwenkrahmen 82. An dem Schwenkrahmen 82 ist eine den Antrieb 68 tragende Konsole 83 befestigt.

Der Arbeitshub 42 der Scherenarme 18,19 ist durch den Kurbelradius des Kurbelzapfens 69 um eine senkrechte Längsachse 84 des Antriebs 68 herum bestimmt. Wie schon erwähnt, wird auch hier der Arbeitshub 42 so klein wie möglich gehalten, um einerseits Antriebsenergie zu sparen und andererseits die Geschwindigkeit der Vorrichtung 1 zu steigern. Sollen dagegen Servicearbeiten am Tropfring 6 vorgenommen werden, müssen die Scherblätter 9,10;12,13 weiter auseinandergefahren werden, als es dem Arbeitshub 42 entspricht. Der dann erforderliche größere Servicehub 45 und der Arbeitshub 42 sind in Fig. 2 zur Vereinfachung nur für den ersten Scherenarm 18 eingetragen.

Den Servicehub 45 der Scherenarme 18,19 erhält man durch Schwenkung des Schwenkrahmens 82 aus der in Fig. 2 mit vollausgezogenen Linien gezeichneten Arbeitsstellung in seine teilweise strichpunktiert angedeutete Servicestellung um die Schwenkachse 81 herum. Dabei wandert eine Achse 85 des Schwenkrahmens 82 auf einem Kreisbogen 86 um die Schwenkachse 81 herum. An der Achse 85 ist das eine Ende eines als Kolben-Zylinder-Einheit ausgebildeten Schwenkmotors 88 angelenkt, dessen anderes Ende an einer Achse 87 des stationären umsetzbaren Teils 80 des Scherengehäuses 24 angelenkt ist. Durch Beaufschlagung des Schwenkmotors 88 mit einem Druckfluid läßt sich also der Schwenkrahmen 82 zwischen seiner Arbeitsstellung und seiner Servicestellung hin- und herschwenken.

In jedem der zuvor erwähnten Ausführungsbeispiele ist dafür gesorgt, daß bei einem Ausfall des Antriebs (68 in Fig. 2) die Scherenarme 18,19 selbsttätig in ihre geöffnete Servicestellung 44 bewegt werden. Dadurch wird verhindert, daß die Vorrichtung etwa bei ganz oder teilweise überdeckten Scherblättern 9,10;12,13 stehenbleibt und sich dann die Masse der nachfließenden Stränge 2,3 auf den Scherblättern 9,10;12,13 aufbaut. Bei dem Ausführungsbeispiel nach Fig. 2 ist dieses Sicherheitsmerkmal dadurch verwirklicht, daß bei Ausfall des Antriebs 68 die zugehörige Steuerung den Schwenkmotor 88 so beaufschlagt, daß der Schwenkrahmen 82 selbsttätig in seine in Fig. 2 strichpunktiert angegebene Servicestellung aufschwenkt und damit die Scherenarme 18,19 in die geöffnete Servicestellung 44 bringt. Bei dem Ausführungsbeispiel nach Fig. 1 kann die Servicestellung 44 durch einen Hilfsantrieb 89 gemäß Fig. 7 erzielt werden.

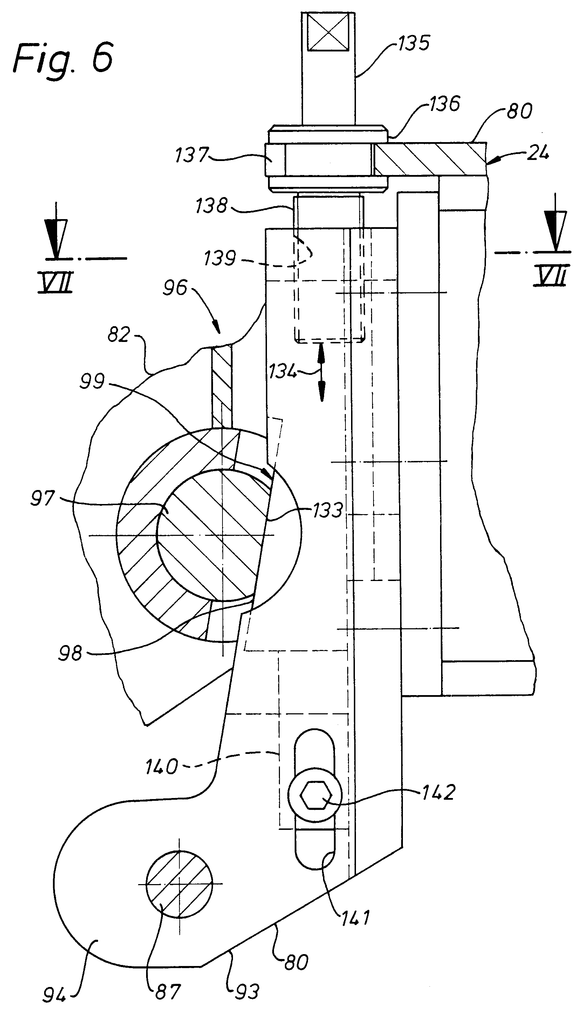

Gemäß Fig. 2 weist der umsetzbare Teil 80 des Scherengehäuses 24 einen Lagerbock 90 für eine Achse 91 des Schwenkrahmens 82 auf. Die Achse 85 ist durch eine Lagergabel 92 des Schwenkrahmens 82 gehalten. Die andere Achse 87 des Schwenkmotors 88 wird von einem Ausleger 93 des umsetzbaren Teils 80 gehalten (vgl. auch Fig. 6). Der Ausleger 93 weist eine sich in Fig. 2 nach links erstreckende, halbkreisförmige Stützzunge 94 auf. Wenn sich der Schwenkrahmen 82 in der in Fig. 2 mit vollausgezogenen Linien dargestellten Arbeitsstellung befindet, übergreift ein Gegenstück 95 des Schwenkrahmens 82 die Stützzunge 94. Dadurch wird einerseits der Schwenkrahmen 82 während des Abtrennbetriebs der Vorrichtung 1 stabilisiert und andererseits die Schwenklagerung 90,91 des Schwenkrahmens 82 entlastet.

Gemäß Fig. 2 ist durch eine einstellbare Anschlagvorrichtung 96 sichergestellt, daß der Schwenkrahman 82 stets seine erforderliche genaue Arbeitsstellung einnimmt. Die Anschlagvorrichtung 96 weist ein Anschlagelement 97 in Form eines in dem Schwenkrahmen 82 schwenkbar gelagerten Bolzens auf. Das Anschlagelement 97 wirkt mit einer Keilfläche 98 eines einstellbaren Keilstücks 99 in einer Weise zusammen, die später im Zusammenhang mit Fig. 6 im einzelnen erläutert wird.

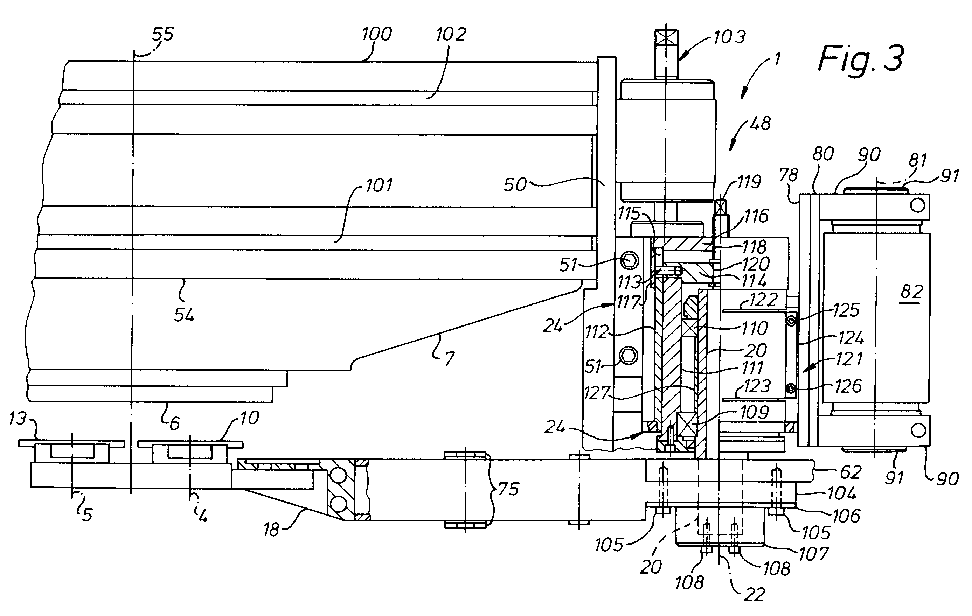

Gemäß Fig. 3 ist an der Speiserschüssel 7 in axialem Abstand von der Einstellschiene 54 eine weitere gleichartige Einstellschiene 100 angebracht. Das Führungsstück 50 ist über nicht gezeichnete Hammerkopfschrauben in der Umfangsrichtung 53 einstellbar an den Einstellschienen 54,100 befestigt, wobei die Hammerkopfschrauben mit ihren Köpfen in T-Nuten 101 und 102 der Einstellschienen 54,100 eingreifen.

Durch eine Einstellvorrichtung 103 ist die Baueinheit 48 insgesamt in der Höhe entlang dem Führungsstück 50 einstellbar. Die so gefundene richtige Höheneinstellung wird durch die Schrauben 51 fixiert (vgl. Fig. 2).

Zusätzlich zu dieser Gesamthöhenverstellung der Baueinheit 48 ist gemäß Fig. 3 der erste Scherenarm 18 gegenüber dem zweiten Scherenarm 19 in der Höhe einstellbar, um die richtige Andrückkraft der Scherblätter jedes Scherblattpaars 8,11 aneinander zu bewerkstelligen.

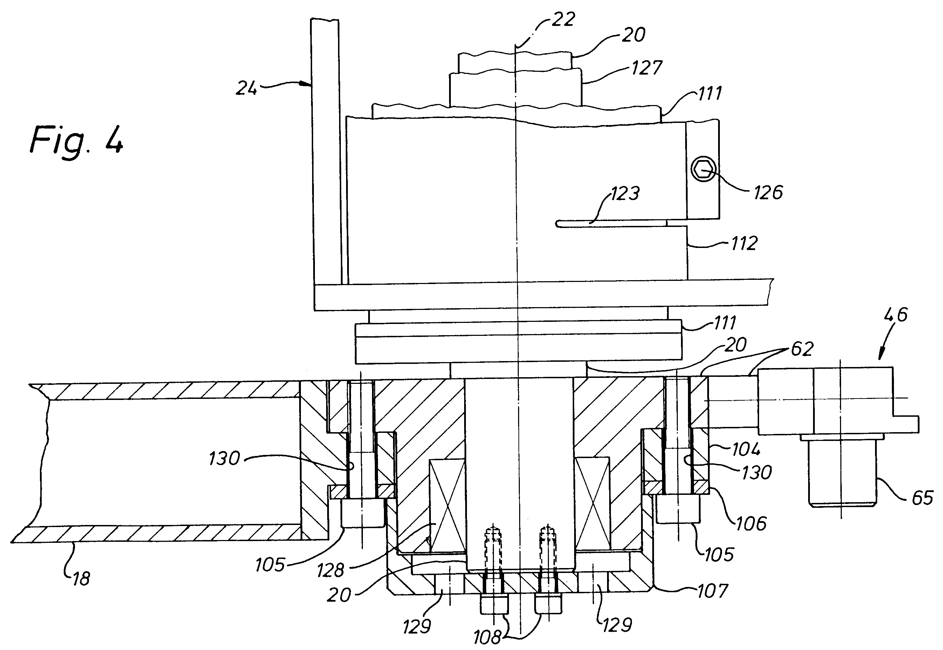

In Fig. 3 erstreckt sich die Welle 20 nach unten (vgl. auch Fig. 4) und trägt dort zunächst den Fortsatz 62. An dem Fortsatz 62 ist koaxial zu der senkrechten Achse 22 ein Lagerauge 104 des Scherenarms 18 schwenkbar gelagert und durch Schrauben 105 unter Zwischenlage eines umlaufenden Ringes 106 an dem Fortsatz 62 festlegbar. Eine Haltekappe 107 ist durch Schrauben 108 unten an der Welle 20 befestigt und stützt einerseits den Fortsatz 62 und andererseits den Ring 106 und damit den Scherenarm 18 ab.

Die Welle 20 ist über Wälzlager 109 und 110 in einer Lagerhülse 111 frei schwenkbar gelagert. Zwischen den Wälzlagern 109, 110 ist eine Abstandshülse 127 angeordnet. Die Lagerhülse 111 ist in einer Führungsbuchse 112 des Scherengehäuses 24 axial verschiebbar. Ein radialer Stift 113 in einem Deckel 114 der Lagerhülse 111 erstreckt sich nach außen in einen Längsschlitz 115 der Führungsbuchse 112 und verhindert eine Relativdrehung der Lagerhülse 111 gegenüber der Führungsbuchse 112. Der Deckel 114 ist durch nicht gezeichnete achsparallele Schrauben mit der Lagerhülse 111 verbunden. In ähnlicher Weise ist durch nicht gezeichnete achsparallele Schrauben eine Deckkappe 116 mit der Führungsbuchse 112 verschraubt. Die Deckkappe 116 übergreift mit einer seitlichen Schürze 117 den oberen Teil der Führungsbuchse 112 einschließlich des Längsschlitzes 115. In eine mittige Gewindebohrung 118 der Deckkappe 116 ist eine Spindel 119 eingeschraubt, die axial gesichert in einer Aufnahmebohrung 120 des Deckels 114 frei drehbar gelagert ist. Drehung der Spindel 119 hat daher ein Heben oder Senken des Deckels 114 und damit - über die Lagerhülse 111 und die Welle 20 - des Scherenarms 18 zur Folge. Wenn die richtige Höheneinstellung des ersten Scherenarms 18 gegenüber dem zweiten Scherenarm 19 gefunden ist, läßt sie sich durch eine Klemmvorrichtung 121 arretieren. Die Klemmvorrichtung 121 ist geschaffen durch Querschlitze 122 und 123 in der Führungsbuchse und radiale Vorsprünge 124 der Führungsbuchse 112, die sich im Abstand voneinander befinden und durch Schrauben 125 und 126 gegeneinandergezogen werden.

Die Welle 21 des zweiten Scherenarms 19 weist eine solche Einzelhöhenverstellung nicht auf, ist aber entsprechend der Welle 20 ebenfalls frei schwenkbar in dem Scherengehäuse 24 gelagert. Die Verbindung des Fortsatzes 63 mit der Welle 21 und die Verbindung des zweiten Scherenarms 19 mit dem Fortsatz 63 geschehen in der gleichen Weise wie in Fig. 3 für den ersten Scherenarm 18 dargestellt und brauchen deshalb nicht erneut im einzelnen gezeigt zu werden.

Gemäß Fig. 4 ist die Haltekappe 107 fest an die Unterseite der Welle 20 geschraubt. Der Fortsatz 62 ist in Umfangsrichtung versetzt gezeichnet.

Bei der Montage wird der Fortsatz 62 zunächst in die gewünschte Schwenkstellung gegenüber der senkrechten Achse 22 gebracht und dann mit einem an sich bekannten Ringfederspannsatz 128 durch Montageöffnungen 129 in der Haltekappe 107 hindurch an der Welle 20 festgelegt. Sodann wird der erste Scherenarm 18 relativ zu dem Fortsatz 62 um die senkrechte Achse 22 herum geschwenkt. Dies ist deshalb möglich, weil das Lagerauge 104 im Bereich jeder der Schrauben 105 ein zu der senkrechten Achse 22 konzentrisches Langloch 130 aufweist. Jedes Langloch 130 ist von dem Schaft einer der Schrauben 105 durchdrungen. Sobald die gewünschte Schwenkeinstellung des Scherenarms 18 gefunden ist, werden die Schrauben 105 gegen den Ring 106 angezogen und damit die Schwenkstellung des Scherenarms 18 gegenüber dem Fortsatz 62 fixiert. Sowohl der Ring 106 als auch der Fortsatz 62 sind auf Ringflächen der Haltekappe 107 abgestützt, können sich also nicht unbeabsichtigt von der Welle 20 lösen.

Wie erwähnt, ist die Lagerung und Schwenkeinstellung des Fortsatzes 63 und des zweiten Scherenarms 19 in der gleichen Weise konstruktiv ausgebildet wie bei dem ersten Scherenarm 18 gemäß Fig. 4.

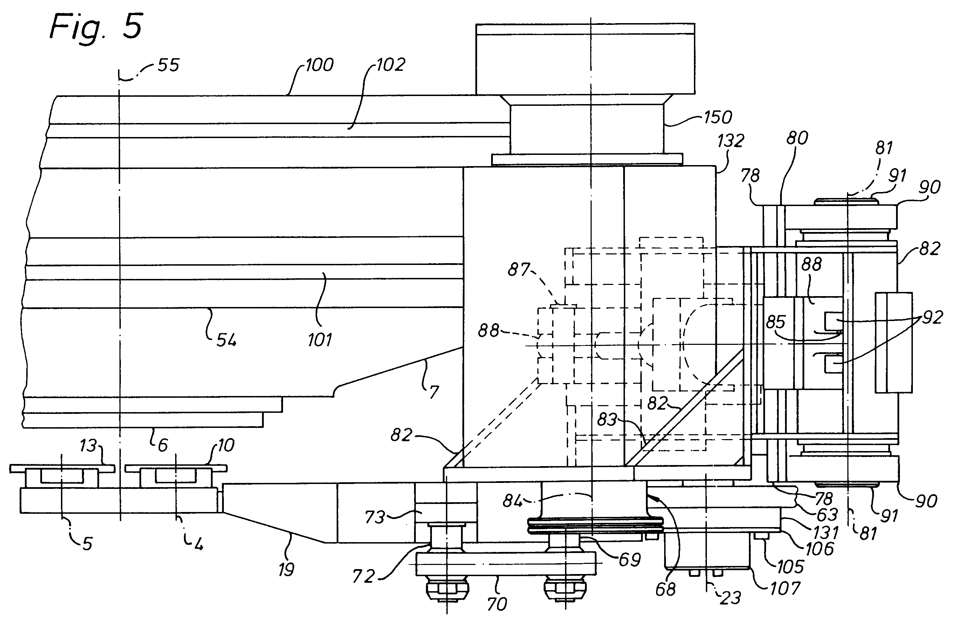

Dies ist in Fig. 5 für den zweiten Scherenarm 19 mit seinem Lagerauge 131 angedeutet. Fig. 5 zeigt auch, wie der Antrieb 68 in der Konsole 83 aufgenommen ist und einen elektrischen Servomotor 132 mit einem Rückführgeber 150 aufweist. In Fig. 5 ist das Verbindungselement 70 vereinfacht ohne die in Fig. 2 gezeigte Schraubverbindung 71 dargestellt.

Fig. 6 zeigt Einzelheiten der einstellbaren Anschlagvorrichtung 96. Das frei schwenkbare Anschlagelement 97 liegt mit einer Abflachung 133 an der Keilfläche 98 an und kann sich stets schwenkend zur satten Anlage an der Keilfläche 98 selbst einstellen. Das Keilstück 99 ist in einer Führung des Auslegers 93 in Richtung des Doppelpfeils 134 verschiebbar. Diese Verschiebung geschieht durch Drehung einer Verstellspindel 135, die mit einem Lagerstück 136 in axialer Richtung fixiert ist und in einer Gabel 137 des Scherengehäuses 24 ruht. Ein Schraubenbolzen 138 der Verstellspindel 135 greift in eine Gewindebohrung 139 des Keilstücks 99 ein.

An seinem in Fig. 6 unteren Ende trägt das Keilstück 99 einen Fortsatz 140 mit einer Gewindebohrung für eine in einem Langloch 141 des Auslegers 93 verschiebbare Fixierschraube 142. Nach dem Lösen der Fixierschraube 142 kann durch Drehen der Verstellspindel 135 die Keilfläche 98 in Richtung des Doppelpfeils 134 bis in die gewünschte Stellung bewegt werden, die den angestrebten Überschnitt an den Scherblattpaaren 8,11 ergibt. Die so gefundene Stellung wird durch Anziehen der Fixierschraube 142 fixiert.

Fig. 7 zeigt Einzelheiten der Fuhrung des Keilstücks 99 in dem umsetzbaren Teil 80 des Scherengehäuses 24.

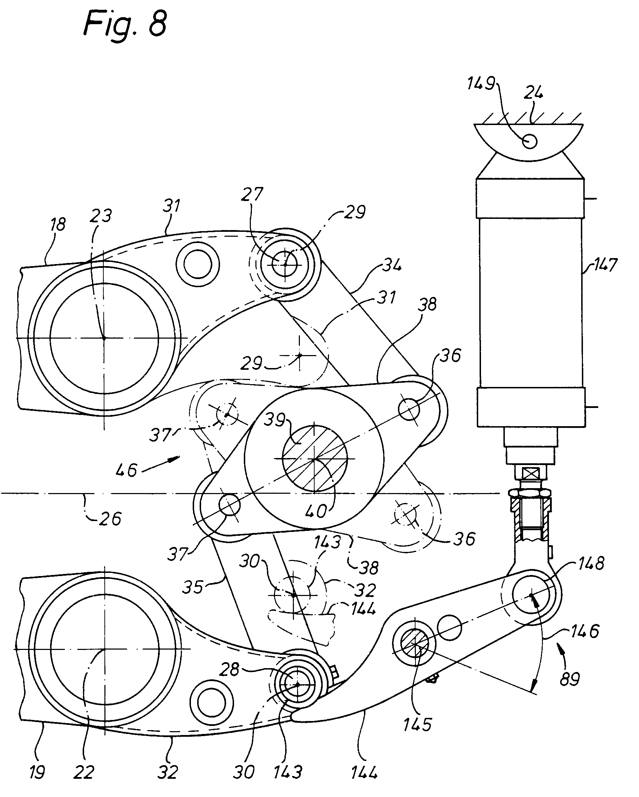

Fig. 8 zeigt die Scherenarme 18,19 gemäß Fig. 1 in ihrer geschlossenen Arbeitsstellung mit vollausgezogenen Linien. Mit strichpunktierten Linien ist für die rückwärtigen Fortsätze 31,32 und das Getriebe 46 jeweils die maximal geöffnete Servicestellung angedeutet. Der Fortsatz 32 trägt konzentrisch zu der Längsachse 30 eine Rolle 143, mit der im Bedarfsfall ein Kipphebel 144 in Berührung gebracht wird. Der Kipphebel 144 ist an einer Achse 145 des Scherengehäuses 24 um einen Winkel 146 kippbar gelagert. Die Kippung geschieht durch den Hilfsantrieb 89, der eine Kolben-Zylinder-Einheit 147 aufweist, die einerseits an einem Zapfen 148 des Kipphebels 144 und andererseits an einem Zapfen 149 des Scherengehäuses 24 angelenkt ist. Die Kolben-Zylinder-Einheit 147 ist doppeltwirkend ausgebildet. In ihrer Ruhestellung ist die Kolbenstange eingezogen und befindet sich der Kipphebel 144 mit seinem freien Ende wie in Fig. 8 gezeichnet, in einem geringen Abstand von der Rolle 143.

Falls der Antrieb für das Getriebe 46 ausfällt, wird der Hilfsantrieb 89 selbsttätig betätigt. Die Kolbenstange der Kolben-Zylinder-Einheit 147 fährt aus und kippt den Kipphebel 144 bis in die in Fig. 8 strichpunktiert angedeutete Endstellung, in der sich die Scherenarme 18,19 in ihrer maximal geöffneten Servicestellung befinden. Am Ende der Service- oder sonstigen Arbeiten wird die Kolbenstange der Kolben-Zylinder-Einheit 147 wieder eingefahren und der Kipphebel 144 in seine Ruhestellung zurückgekippt.

**Patentansprüche**

1. Vorrichtung (1) zum Abtrennen von Posten von einem oder mehreren, senkrecht aus einem Speiser austretenden Strängen (2,3) aus schmelzflüssigem Glas,

bei der das Abtrennen jedes Postens durch ein Scharblattpaar (8;11) erfolgt,

wobei ein Scherblatt (9,10;12,13) jedes Scherblattpaars (8;11) an einem zugehörigen, um eine senkrechte Achse (22,23) schwenkbar gelagerten Scherenarm (18,19) angeordnet ist,

und wobei die Schließ- und Öffnungsbewegungen der beiden Scherenarme (18,19) durch ein Getriebe (46) miteinander synchronisiert und durch einen Antrieb (68) erzeugbar sind,

dadurch gekennzeichnet, daß der Antrieb (68) einen elektrischen Servomotor (132) aufweist,

daß durch den Antrieb (68) eine zwei im Abstand voneinander angeordnete Kurbelzapfen (36,37) aufweisende Kurbel (38) antreibbar ist,

und daß an jedem der Kurbelzapfen (36,37) ein Ende einer Lasche (34,35) angelenkt ist, deren anderes Ende an einem Zapfen (27,28) eines Fortsatzes (31,32) des zugehörigen Scherenarms (18,19) angelenkt ist.

2. Vorrichtung nach Anspruch 1, dadurch gekennzeichnet, daß die Kurbelzapfen (36,37) an der Kurbel (38) diametral gegenüberliegend angeordnet sind.

3. Vorrichtung nach Anspruch 1, dadurch gekennzeichnet, daß die Verbindungslinien der Längsachsen der Kurbelzapfen (36,37) mit der Längsachse (40) der Kurbel (38) einen von 180° abweichenden Winkel miteinander einschließen.

4. Vorrichtung nach einem der Ansprüche 1 bis 3, dadurch gekennzeichnet, daß jeder der Scherenarme (18,19) um eine gesonderte senkrechte Achse (22,23) schwenkbar ist, und daß die beiden senkrechten Achsen (22,23) im Abstand (25) voneinander angeordnet sind.

5. Vorrichtung nach Anspruch 4, dadurch gekennzeichnet, daß die Längsachse (40) der Kurbel (38) in einem Abstand (56) von einer Mittenebene (26) zwischen den beiden senkrechten Achsen (22,23) angeordnet ist, und daß die Längsachse (4,5) des wenigstens einen Stranges (2,3) in der Mittenebene (26) liegt.

6. Vorrichtung nach Anspruch 4 oder 5, dadurch gekennzeichnet, daß die Längsachsen (29,30) der Zapfen (27,28) der Fortsätze (31,32) in einer geschlossenen Stellung der Scherenarme (18,19) einen Abstand (33) voneinander aufweisen, der größer ist als der Abstand (25) der senkrechten Achsen (22,23) voneinander.

7. Vorrichtung nach einem der Ansprüche 4 bis 6, dadurch gekennzeichnet, daß die Längsachsen (29,30) der Zapfen (27,28) der Fortsätze (31,32) in einer maximal geöffneten Servicestellung (44) der Scherenarme (18,19) einen Abstand (47) voneinander aufweisen, der kleiner ist als der Abstand (25) der senkrechten Achsen (22,23) voneinander.

8. Vorrichtung nach einem der Ansprüche 1 bis 7, dadurch gekennzeichnet, daß die Kurbel (38) zwischen einer geschlossenen Stellung der Scherenarme (18,19) und einer maximal geöffneten Servicestellung (44) der Scherenarme (18,19) um einen Winkel von weniger als 180° hin- und herschwenkbar ist.

9. Vorrichtung nach einem der Ansprüche 1 bis 8, dadurch gekennzeichnet, daß bei Ausfall des Antriebs (68) die Scherenarme (18,19) durch einen Hilfsantrieb (89) in eine geöffnete Stellung bewegbar sind.

10. Vorrichtung nach Anspruch 9, dadurch gekennzeichnet, daß der Hilfsantrieb (89) eine Kolben-Zylinder-Einheit (147) aufweist, die über einen vorrichtungsfest (vgl. 145) schwenkbar gelagerten Kipphebel (144) in Wirkverbindung mit dem Fortsatz (32,143) eines der Scherenarme (19) bringbar ist.

11. Vorrichtung (1) zum Abtrennen von Posten von einem oder mehreren, senkrecht aus einem Speiser austretenden Strängen (2,3) aus schmelzflüssigem Glas,

bei der das Abtrennen jedes Postens durch ein Scharblattpaar (8;11) erfolgt,

wobei ein Scherblatt (9,10;12,13) jedes Scherblattpaars (8;11) an einem zugehörigen, um eine senkrechte Achse (22,23) schwenkbar gelagerten Scherenarm (18,19) angeordnet ist,

und wobei die Schließ- und Öffnungsbewegungen der beiden Scherenarme (18,19) durch ein Getriebe (46) miteinander synchronisiert und durch einen Antrieb (68) erzeugbar sind,

dadurch gekennzeichnet, daß der Antrieb (68) einen elektrischen Servomotor (132) aufweist,

daß durch den Antrieb (68) einer (19) der Scherenarme (18,19) schwenkend antreibbar ist,

daß jeder Scherenarm (18,19) einen Fortsatz (62,63) aufweist,

und daß freie Enden der Fortsätze (62,63) durch eine Lasche (67) gelenkig miteinander verbunden sind.

12. Vorrichtung nach einem der Ansprüche 1 bis 11, dadurch gekennzeichnet, daß wenigstens einer der Fortsätze (62,63) relativ zu seinem Scherenarm (18,19) einstellbar ist.

13. Vorrichtung nach Anspruch 12, dadurch gekennzeichnet, daß die Einstellung des wenigstens einen Fortsatzes (62,63) durch Schwenkung um die senkrechte Achse (22,23) seines Scherenarms (18,19) geschieht.

14. Vorrichtung nach Anspruch 13, dadurch gekennzeichnet, daß sowohl der wenigstens eine Fortsatz (62,63) als auch der zugehörige Scherenarm (18,19) relativ zu einer die senkrechte Achse (22,23) aufweisenden Welle (20,21) schwenkend einstellbar sind.

15. Vorrichtung nach einem der Ansprüche 1 bis 14, dadurch gekennzeichnet, daß einer (18) der Scherenarme (18,19) gegenüber dem anderen Scherenarm (19) in senkrechter Richtung einstellbar ist.

16. Vorrichtung nach Anspruch 15, dadurch gekennzeichnet, daß der einstellbare Scherenarm (18) an einer um die senkrechte Achse (22) schwenkbaren Welle (20) befestigt ist, daß die Welle (20) in einer Lagerhülse (111) schwenkbar gelagert ist, und daß die Lagerhülse (111) in einer Führungsbuchse (112) eines Scherengehäuses (24) axial einstellbar ist.

17. Vorrichtung (1) zum Abtrennen von Posten von einem oder mehreren, senkrecht aus einem Speiser austretenden Strängen (2,3) aus schmelzflüssigem Glas,

bei der das Abtrennen jedes Postens durch ein Scherblattpaar (8;11) erfolgt,

wobei ein Scherblatt (9,10;12,13) jedes Scherblattpaars (8;11) an einem zugehörigen, um eine senkrechte Achse (22,23) schwenkbar gelagerten Scherenarm (18,19) angeordnet ist,

und wobei die Schließ- und Öffnungsbewegungen der beiden Scherenarme (18,19) durch ein Getriebe (46) miteinander synchronisiert und durch einen Antrieb (68) erzeugbar sind,

insbesondere nach einem der Ansprüche 1 bis 16,

dadurch gekennzeichnet, daß die Vorrichtung (1) und ihr Antrieb (68) zu einer Baueinheit (48) ausgebildet sind,

daß die Baueinheit (48) in senkrechter Richtung einstellbar ist,

und daß der Antrieb (68) um eine senkrechte Schwenkachse (81) herum schwenkbar angeordnet ist.

18. Vorrichtung nach Anspruch 17, dadurch gekennzeichnet, daß die Baueinheit (48) entlang eines Führungsstücks (50) einstellbar ist, und daß das Führungsstück (50) um eine senkrechte Längsachse (55) eines die Stränge (2,3) formenden Tropfrings (6) des Speisers herum einstellbar ist.

19. Vorrichtung nach Anspruch 17 oder 18, dadurch gekennzeichnet, daß die Baueinheit (48) ein mit dem Führungsstück (50) zusammenwirkendes Scherengehäuse (24) aufweist,

   daß die senkrechte Schwenkachse (81) an dem Scherengehäuse (24) ausgebildet ist,

   daß um die senkrechte Schwenkachse (81) herum ein den Antrieb (68) tragender Schwenkrahmen (82) schwenkbar ist,

   und daß der Antrieb (68) durch ein Verbindungselement (70) mit einem (19) der Scherenarme (18,19) in Antriebsverbindung steht.

20. Vorrichtung nach Anspruch 19, dadurch gekennzeichnet, daß zwischen dem Scherengehäuse (24) und dem Schwenkrahmen (82) ein Schwenkmotor (88) angeordnet ist.

21. Vorrichtung nach Anspruch 19 oder 20, dadurch gekennzeichnet, daß zwischen dem Scherengehäuse (24) und dem Schwenkrahmen (82) eine eine Arbeitsstellung des Schwenkrahmens (82) definierende, einstellbare Anschlagvorrichtung (96) vorgesehen ist.

22. Vorrichtung nach Anspruch 21, dadurch gekennzeichnet, daß die Anschlagvorrichtung (96) ein einstellbares Keilstück (99) mit einer Keilfläche (98) und ein sich an die Keilfläche (98) anlegendes Anschlagelement (97) aufweist.

Fig. 1

Fig. 2

*Fig.3*

EP 0 501 098 A1

Fig. 4

EP 0 501 098 A1

Fig. 5

Fig. 6

# Fig. 7

# Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 736 826 (W.R. WARD, JR.)<br>* das ganze Dokument *<br>--- | 1-22 | C03B7/10 |
| A | US-A-4 444 079 (M.C. NEWKIRK)<br>* das ganze Dokument *<br>--- | 1-22 | |
| A | EP-A-0 100 598 (EMHART IND INC)<br>* das ganze Dokument *<br>--- | 1-22 | |
| D,A | US-A-2 678 519 (W.T. HONISS)<br>* das ganze Dokument *<br>--- | 1-22 | |
| D,A | US-A-2 977 718 (F.A. DAHLMAN)<br>* das ganze Dokument *<br>--- | 1-22 | |
| D,A | US-A-2 472 560 (C.R. AVERY)<br>* das ganze Dokument *<br>--- | 1-22 | |
| D,A | GB-A-688 803 (STANDARD TELEPHONES AND CABLES LTD.)<br>* das ganze Dokument *<br>--- | 1-22 | **RECHERCHIERTE SACHGEBIETE (Int. Cl.5)** |
| D,A | DE-A-1 922 247 (EMHART CORP.)<br>* das ganze Dokument *<br>----- | 1 | C03B |

Der vorliegende Recherchenbericht wurde für alle Patentansprüche erstellt

| Recherchenort | Abschlußdatum der Recherche | Prüfer |
|---|---|---|
| BERLIN | 10 JUNI 1992 | KUEHNE H.C. |